(19) **Europäisches Patentamt**

**European Patent Office**

**Office européen des brevets**

(11) **EP 0 539 302 B2**

(12) **NOUVEAU FASCICULE DE BREVET EUROPEEN**

(45) Date de publication et mention de la décision concernant l'opposition:
**29.11.2000 Bulletin 2000/48**

(45) Mention de la délivrance du brevet:
**07.08.1996 Bulletin 1996/32**

(21) Numéro de dépôt: **92420336.7**

(22) Date de dépôt: **28.09.1992**

(51) Int. Cl.$^7$: **B29C 55/14**, C08J 5/18

(54) **Procédé d'obtention films en polyester semi-cristallins orientés**

Verfahren zur Herstellung von orientierte Folien aus teilkristallinem Polyester

Method for the manufacture of oriented semi-crystalline polyester films

(84) Etats contractants désignés:
**AT BE DE DK ES FR GB GR IE IT LU NL SE**

(30) Priorité: **24.10.1991 FR 9113360**

(43) Date de publication de la demande:
**28.04.1993 Bulletin 1993/17**

(73) Titulaire:
**TORAY PLASTICS EUROPE SA**
**01701 Miribel (FR)**

(72) Inventeurs:
• **Gerwig, Dominique**
  **F-69004 Lyon (FR)**
• **Lorentz, Gilles**
  **F-69100 Villeurbanne (FR)**
• **Stevenson, Timothy**
  **F-01120 Montluel (FR)**

(74) Mandataire:
**Kügele, Bernhard et al**
**NOVAPAT INTERNATIONAL SA,**
**9, Rue du Valais**
**1202 Genève (CH)**

(56) Documents cités:
**EP-A- 0 279 611**      **DE-A- 3 621 205**
**GB-A- 2 134 442**

• **Untersuchungsbericht 2/90 "Untersuchung von Tetoron E2R der Fa. Teijin", HOECHST AG, 6. Avril 1990**

Remarques:
Le dossier contient des informations techniques présentées postérieurement au dépôt de la demande et ne figurant pas dans le présent fascicule.

**Description**

La présente invention a pour objet un procédé d'obtention de films orientés en polyesters semi-cristallins possédant un ensemble de propriétés mécaniques et physiques améliorées, mettant en oeuvre un multi-étirage

On sait que les films orientés en polyesters semi-cristallins sont obtenus par étirage selon deux directions orthogonales d'un film amorphe provenant de l'extrusion à l'état fondu d'un polyester cristallisable. On sait également que les propriétés mécaniques et physiques des films bi-orientés dépendent dans une large mesure, pour un polyester donné, des conditions mises en oeuvre au cours du processus de filmature et notamment des conditions d'étirage du film : type de séquences d'étirage, températures et taux des étirages dans les deux directions orthogonales. Le plus généralement, les films en polyester sont obtenus par mise en oeuvre d'un procédé d'étirage dit "en séquence normale" et selon lequel on soumet le film amorphe, d'abord à un étirage longitudinal, c'est-à-dire dans la direction de la machine de filmature (étirage MD), puis à un étirage transversal selon une direction perpendiculaire à la direction de la machine (étirage TD). Dans le but d'améliorer un certain nombre de propriétés mécaniques et physiques des films en polyester, par exemple leur régularité d'épaisseur, leur module, leur valeur F5 (résistance à la traction mesurée pour une élongation de 5 %) ainsi que la régularité de ces propriétés dans la largeur de la laize, on a proposé de procéder à l'étirage du film amorphe d'abord dans le sens transversal, puis dans le sens longitudinal selon une technique dite de séquence inverse (cf. par exemple brevet américain USP 2.995.779).

La miniaturisation croissante des appareils d'enregistrement et de lecture des supports magnétiques s'est traduite par la nécessité d'utiliser des films en polyester de plus en plus minces auxquels il est indispensable de conférer un ensemble de propriétés physiques et mécaniques (par exemple module, valeur F5, stabilité dimensionnelle, régularité d'épaisseur, régularité des propriétés dans la largeur de la laize) meilleures que celles des films plus épais. Afin d'obtenir de tels films, on a proposé de modifier le processus d'étirage des procédés de filmature, en jouant sur le nombre des étapes d'étirage longitudinal et/ou d'étirage transversal, sur l'ordre de ces étapes et leurs conditions (températures, taux d'étirage). Ainsi, dans les demandes de brevets japonais publiées sous les n° 83/118 220 et 83/153 231, on a proposé de préparer des films polyester présentant une valeur F5 dans le sens longitudinal (F5 MD) supérieure ou égale à 25 kg/mm$^2$ et un taux de retrait longitudinal à 100°C (RMD 100) inférieur à 2,5 % en procédant à un étirage en plusieurs étapes comportant deux stades d'étirage longitudinal (MD) dans des conditions conduisant à un film monoétiré présentant un taux d'orientation non cristalline compris entre 0,6 et 1 et une biréfringence planaire $\Delta n$ comprise entre 0,002 et 0,1 ou 0,06 et 0,2, puis à un étirage transversal et à un nouvel étirage longitudinal. La biréfringence planaire nMD-nTD est la différence entre l'indice de réfraction mesuré dans le sens longitudinal du film et l'indice de réfraction mesuré selon le sens transversal. Bien que les films obtenus selon ces procédés présentent une F5 MD élevée tout en conservant une F5 TD conforme aux exigences de l'industrie (environ 10 kg/mm$^2$), ils ont une stabilité dimensionnelle insuffisante (RMT 100 compris entre 1,8 et 2,06) ; par ailleurs, la multiplication des étapes d'étirage et la nécessité de recourir à un taux d'étirage planaire supérieur ou égal à 25 rend le procédé onéreux en raison de la complexité de l'appareillage et délicat à mettre en oeuvre.

Dans le brevet européen 0 086 302, on a encore proposé de préparer des films polyester bi-étirés présentant une valeur F5 MD supérieure ou égale à 18 kg/mm$^2$, une valeur F5 TD supérieure ou égale à 17 kg/mm$^2$ et une stabilité dimensionnelle dans les deux sens (RMD 100 et RTD 100 inférieurs ou égaux à 2,5 %). Ces valeurs sont atteintes au prix de la mise en oeuvre d'un multi-étirage comportant un étirage MD en deux étapes conduisant à un film monoétiré présentant un taux d'orientation non cristalline compris entre 0,6 et 1 et une biréfringence planaire $\Delta n$ comprise entre 0,02 et 0,1, puis un étirage transversal et enfin un réétirage dans les deux directions successivement (étirage MD puis étirage TD) ou simultanément. Ce procédé souffre des mêmes inconvénients que les procédés multi-étapes décrits dans les demandes japonaises précitées. L'obtention de valeurs élevées de F5 dépend de la mise en oeuvre de taux d'étirage particulièrement importants (taux d'étirage longitudinal total compris entre environ 8 et environ 10 ; taux d'étirage planaire compris entre 37 et 54).

Le brevet DE-A-3 621 605 décrit un procédé de préparation de films polymériques biaxialement étirés comprenant plusieurs étirages, notamment une succession d'étirages longitudinal/transversal/longitudinal.

Le premier étirage longitudinal est effectué en 2 étapes comportant respectivement des taux d'étirages de 1,3 à 3,0 et de 2,0 à 3,5, le taux d'étirage global étant de 3,0 à 5,5. Les caractéristiques essentielles de ce procédé résident dans une disposition particulière des rouleaux d'étirage permettant d'économiser de l'énergie et dans l'absence de refroidissement du film entre les différentes phases d'étirages. Cependant, il s'avère que la mise en oeuvre en deux étapes du premier longitudinal ne permet pas d'obtenir le niveau de propriétés souhaité pour certaines applications visées des films en polyester.

Le brevet EP-A-0 229 346 décrit des films en polynaphtalate d'éthylène ayant une anisotrope faible, des propriétés mécaniques elevées dans toutes les directions et notamment un module d'Young dans la gamme 500 à 800 kg/mm$^2$

La complexité des procédés proposés répond à la nécessité de concilier des conditions d'étirage qui agissent de façon contradictoire sur certaines des propriétés recherchées, par exemple sur F5 et sur la stabilité dimensionnelle ou les propriétés physiques ou mécaniques dans chacune des directions d'étirage. L'industrie est donc toujours confrontée au problème de l'obtention de films en polyester présentant un ensemble de propriétés physiques et mécaniques répondant aux exigences des utilisateurs par un procédé simple à mettre en oeuvre au stade industriel. La présente invention se propose précisément d'apporter une solution à ce problème.

Plus spécifiquement, un premier objectif poursuivi par la présente invention réside dans la mise au point d'un procédé simple et facile à mettre en oeuvre au stade industriel pour la production de films en polyester.

Un deuxième objectif poursuivi par la présente invention réside dans la mise au point d'un procédé simple et facile à mettre en oeuvre au stade industriel pour la production de films en polyester présentant un excellent compromis entre leurs propriétés mécaniques et physiques dans les sens longitudinal et transversal, une bonne aptitude à la coupe en bandes et une bonne résistance à l'abrasion.

La présente invention a pour troisième objectif l'obtention de films polyester orientés semi-cristallins présentant un module et une valeur F5 dans le sens longitudinal élevés tout en conservant des propriétés mécaniques dans le sens transversal (module et F5) répondant aux exigences des films commerciaux : F5 TD supérieur ou égal à 10 daN/mm$^2$ et module TD supérieur ou égal à 400 daN/mm$^2$ et une rigidité de bande (somme EMD + ETD des modules dans les sens longitudinal et transversal) élevée.

Un quatrième objectif que s'est fixé la présente invention réside dans l'obtention de films en polyester présentant un bon compromis entre des propriétés mécaniques élevées et de faibles retraits MD et TD.

Un cinquième objectif poursuivi par la présente invention consiste dans la fabrication de films en polyester présentant une bonne aptitude à la coupe en bandes. On sait que, lors de la coupe d'un film en bandes de largeur réduite, se produisent diverses anomalies, notamment la formation de poussières et/ou la formation d'un bec sur la bande le long du bord de coupe, qui nuisent à la qualité des bandes magnétiques finales et à la formation des galettes de bandes. On sait également (cf. demande de brevet japonais publiée sous le n° 63 94734) que les films polyester présentant un rapport de la valeur de leur résistance à la rupture Rr dans le sens transversal (Rr TD) à la valeur de leur F5 TD inférieur à 2,2 présentent une excellente aptitude à la coupe en bandes.

La présente invention se propose comme sixième objectif l'obtention de films en polyester présentant un bon compromis entre les propriétés physique et mécanique et la résistance à l'abrasion, c'est-à-dire une faible aptitude à la séparation des particules de charge du polymère qui les entoure. On sait que la séparation des particules de charge, dans les conditions de manipulation des films et d'utilisation des produits finals tels que les bandes magnétiques, est favorisée par l'apparition de vides (décohésion) entre les particules et le polymère lors du processus d'étirage. Il importe donc de réduire le plus possible la formation de ces vides au cours de l'étirage du film sans nuire pour autant aux propriétés physique et mécanique.

Un septième objectif que se propose d'atteindre la présente invention réside dans l'obtention de films, présente une bonne régularité d'épaisseur dans les directions longitudinale et transversale.

Plus spécifiquement, la présente invention a pour premier objet, un procédé tel que défini dans la revendication 1

Par biréfringence axiale, on désigne dans la présente demande la valeur représentative de l'orientation axiale des chaînes du polymère, calculée à partir des indices de réfractions nMD, nTD et nZ du film étiré mesurés respectivement selon les axes longitudinal, transversal et normal au plan du film, au moyen de l'expression :

$$\Delta n \text{ ax} = nMD - \frac{nTD + nZ}{2}$$

L'indice moyen de réfraction est la moyenne des indices de réfraction (nMD + nTD + nZ)/3 .

Dans le procédé selon la présente invention, le premier étirage longitudinal (ci-après mD) est réalisé de façon à ce qu'il n'ait qu'une très faible action d'orientation sur les chaînes du polymère et sur sa cristallisation. Dans ces conditions, le procédé selon l'invention peut être considéré comme un procédé d'étirage en séquence inverse précédé d'un étirage mD faiblement orientant et très peu cristallisant. On a constaté avec surprise que la mise en oeuvre, dans un procédé d'étirage en séquence inverse, d'une étape d'étirage longitudinal de ce type, conduit à des films polyester biétirés présentant une excellente aptitude à la coupe en bandes illustrée par un rapport Rr TD/F5 TD ≦ 2,2 .

Les polyesters cristallisables utilisables dans le procédé selon la présente invention sont ceux auxquels on fait appel habituellement pour l'obtention de films orientés semi-cristallins. Il s'agit de préférence d'homopolyesters dérivés des acides téréphtalique ou naphtalènedicarboxyliques (acide naphtalènedicarboxylique-2,5 ou 2,6) et de l'éthylèneglycol. On peut également faire appel à des copolyesters dans lesquels les motifs téréphtalate ou naphtalènedicarboxylate d'éthylèneglycol représentent au moins 80 % en moles des motifs esters. Comme acides et/ou glycols qui peuvent être associés aux acides téréphtalique ou naphtalènedicarboxyliques et à l'éthylèneglycol, on peut citer des acides tels que l'acide isophtalique, la dihydroxycarbonyl-4,4' diphénylsulfone ; le dihydroxycarbonyl-4,4' diphényléther ; les acides alcanedioïques ayant de 4 à 16 atomes de carbone (acide adipique, succinique ou sébacique par exemple) et des glycols comme le propylèneglycol, le butandiol-1,4, le cyclohexanediméthanol-1,4, le néopentylglycol.

Les polyesters utilisés pour l'obtention des films selon la présente invention contiennent les additifs utilisés de manière usuelle. En particulier, ils peuvent contenir toute charge d'origine interne ou externe destinée à communiquer aux films bi-étirés une rugosité propre à en assurer uns manipulation aisée (bobinage, glissement du film sur lui-même). Les charges internes sont en général des résidus catalytiques précipités sous forme de particules. Comme charge externe, on peut utiliser des particules d'oxydes ou de sels des métaux des groupes II, III et IV de la classification périodique des éléments tels que $CaCO_3$, $TiO_2$, $SiO_2$, ou le kaolin.

Le procédé conforme à la présente invention, est mis en oeuvre de la façon suivante : un polyester porté à sa température de fusion, soit environ 250 à 300°C, est extrudé sous forme d'une nappe refroidie à 10-70°C sur un tambour de coulée. Le film amorphe ainsi obtenu est soumis ensuite aux étapes d'étirage mD, TD et MD dans les conditions précisées ci-après. Après l'étirage, le film est soumis à une thermofixation dans les conditions usuelles de température. La thermofixation peut être accompagnée d'une relaxation du film bi-étiré dans dans le sens transversal ; il n'est pas nécessaire de procéder à une relaxation dans le sens longitudinal, pour atteindre un faible taux de retrait MD à 105 et 150°C et ceci constitue un autre avantage du présent procédé. On ne sortirait cependant pas du cadre de la présente invention en procédant à une telle relaxation.

Les conditions du premier étirage mD sont choisies pour que le film FmD qui en résulte présente une biréfringence axiale $\Delta n$ ax inférieure ou égale à 0,015 et un indice de réfraction moyen inférieur ou égal à 1,5775. Un tel résultat est atteint lorsque le taux d'étirage longitudinal $\lambda mD$ du film amorphe est maintenu à une valeur inférieure ou égale à 3 et, de préférence inférieure ou égale à 2,5. Au cours de l'étirage mD, le taux d'étirage $\lambda mD$ est de préférence supérieur à 1,2. A l'intérieur de l'intervalle ainsi défini, $\lambda mD$ est choisi en fonction de son influence sur les propriétés recherchées et en tenant compte des valeurs des taux d'étirage $\lambda TD$ et $\lambda MD$ et de leur influence sur les propriétés des films. En particulier, on a constaté que pour un taux total d'étirage longitudinal $\lambda mD$ x $\lambda MD$ donné, l'augmentation de $\lambda mD$ se traduit par une diminution de l'orientation axiale des chaînes mais également de la valeur de F5 MD. Dans ces conditions, $\lambda mD$ est choisi dans l'intervalle précité pour conférer la plus faible orientation axiale possible aux chaînes à l'issue de cet étirage sans provoquer pour autant la chute de la valeur de F5 MD du film bi-étiré final. La température à laquelle est porté le film au cours de cette phase se situe dans un intervalle allant de la température de transition vitreuse (Tg) + 40°C à la température de cristallisation (Tc) - 20°C (intervalle de Tg + 40 à Tc - 20) et de préférence dans l'intervalle de Tg + 45°C à Tc - 25°C). Ainsi, pour un film en polytéréphtalate d'éthylèneglycol (PET), la température mise en oeuvre à l'étape mD est comprise entre 120 et 150°C.

A la fin de l'étirage longitudinal mD, on procède de préférence à un refroidissement du film à une température allant de Tg - 60°C à Tg - 20°C et plus préférentiellement de Tg - 50°C à Tg - 30°C, par passage sur un ou plusieurs rouleaux rapides dont la température se situe dans l'une des zones indiquées précédemment.

L'étirage transversal TD est réalisé dans les conditions habituelles de température ; cette dernière est en général comprise entre Tg + 10°C et Tg + 40°C et, de préférence, entre Tg + 15°C et Tg + 35°C. Le taux d'étirage transversal $\lambda TD$ est en général compris entre 3 et 5. La valeur de $\lambda TD$ dépend dans une certaine mesure de son influence sur les propriétés du film et, par conséquent, du type de film que l'on désire obtenir et des valeurs choisies pour $\lambda mD$ et pour le taux d'étirage longitudinal final $\lambda MD$. On a constaté, en effet, que l'augmentation de $\lambda TD$ exerce une influence favorable sur l'orientation axiale des chaînes de polymères par rapport à l'axe longitudinal d'étirage et donc sur le module dans le sens longitudinal (EMD) pour une valeur donnée du taux global d'étirage longitudinal $\lambda mD$ x $\lambda MD$. Dans ces conditions, $\lambda TD$ doit être choisi à l'intérieur de l'intervalle donné ci-avant, de façon à conduire à l'obtention d'un EMD aussi élevé que possible. Ce choix peut être aisément déterminé par l'homme de métier pour chaque cas particulier au moyen d'essais simples.

La température à laquelle est conduit le deuxième étirage longitudinal (MD) est comprise entre Tg + 15°C et Tg + 50°C. Les valeurs du taux d'étirage $\lambda MD$ sont comprises dans un intervalle de 2,3 à 5 et de préférence entre 2,4 et 4,5. Les valeurs de $\lambda MD$ sont choisies en tenant compte des valeurs de $\lambda mD$ et $\lambda TD$. En effet, il a été constaté que le taux total d'étirage longitudinal $\lambda mD$ x $\lambda MD$ exerce une influence sur l'orientation axiale des chaînes, sur le module longitudinal EMD, sur F5 MD et sur la stabilité dimensionnelle du film bi-étiré. En particulier, on a constaté que pour une valeur donnée de $\lambda mD$, l'orientation axiale des chaînes, le module EMD, F5 MD augmentent quand $\lambda mD$ x $\lambda MD$ augmente. A l'inverse, l'augmentation de $\lambda mD$ x $\lambda MD$ provoque l'augmentation du retrait longitudinal à 105°C et à 150°C. La valeur de $\lambda mD$ x $\lambda MD$ doit donc être choisie pour réaliser le meilleur compromis possible entre des valeurs élevées de EMD et F5 MD et une valeur faible du retrait longitudinal. Des valeurs de $\lambda mD$ x $\lambda MD$ comprises entre 5,5 et 7 conviennent bien pour obtenir ces objectifs contradictoires.

On a encore constaté que l'orientation totale résultant de l'étirage biaxial TD et MD exerce une influence sur l'aptitude à la coupe en bandes et en particulier que cette dernière est d'autant meilleure que le taux d'étirage planaire $\lambda TD$ x $\lambda MD$ diminue. Dans ces conditions, $\lambda TD$ et $\lambda MD$ sont, de préférence, choisis dans les intervalles définis ci-avant de façon que le taux d'étirage $\lambda TD$ x $\lambda MD$ soit inférieur ou égal à 12,5.

Enfin, $\lambda mD$, $\lambda MD$ $\lambda TD$ sont de préférence choisis dans les intervalles définis de façon à ce que le rapport

($\lambda$mD + $\lambda$MD)/$\lambda$TD  soit supérieur à 1,35 pour que les propriétés mécanique et physique soient les meilleures possibles.

Le taux total d'étirage (étirage planaire) $\lambda$mD x $\lambda$TD x $\lambda$MD  est de préférence au moins égal à 18. La mise en oeuvre d'une étape d'étirage longitudinal faiblement orientante et peu cristallisante préalable à une séquence inverse rend inutile le recours à des taux d'orientation planaire supérieurs à 26, de sorte que ce dernier est de préférence compris entre 19 et 26.

Le procédé selon la présente invention permet d'obtenir de façon simple et sans recourir à des taux planaires élevés des films en polyester présentant une large gamme de propriétés physiques et mécaniques tels que les films semitensilisés, tensilisés et supertensilisés. Il convient tout spécialement bien à l'obtention de films présentant à la fois a) de bonnes propriétés physiques et mécaniques dans le sens longitudinal et des propriétés physiques et mécaniques dans le sens transversal répondant aux exigences des utilisateurs finals, b) un faible taux de retrait MD à 105 et 150°C, c) une bonne aptitude à la découpe en bandes et d) une bonne résistance à la décohésion et en particulier des films présentant l'ensemble des propriétés dont les valeurs ont été précisées ci-avant et qui constituent l'un des objets de la présente invention. Pour obtenir de tels films, les taux d'étirage $\lambda$mD, $\lambda$TD et $\lambda$MD sont choisis dans les intervalles définis ci-avant pour que :

i) le taux total d'étirage longitudinal $\lambda$mD x $\lambda$MD soit compris entre 5,5 et 6,5 ;
ii) le taux d'étirage planaire $\lambda$MD x $\lambda$TD soit inférieur ou égal à 12,5 ;
iii) le taux total d'étirage planaire $\lambda$mD x $\lambda$TD x $\lambda$MD  soit compris entre 19 et 26 ;
iv) le quotient du taux total d'étirage longitudinal $\lambda$mD x $\lambda$MD par $\lambda$TD soit supérieur ou égal à 1,45.

Le film bi-étiré est ensuite soumis à une thermofixation dans les conditions habituelles. En général, la température de thermofixation est comprise entre 180 et 250°C. Au cours de la thermofixation, le film biétiré peut être soumis à une relaxation dans le sens transversal, de façon à améliorer sa stabilité dimensionnelle. Les conditions de cette relaxation sont choisies pour conférer au film biétiré un taux de retrait TD à 105°C inférieur ou égal à 1 et de préférence compris entre 0 et 0,5 %. De préférence, le taux de relaxation transversale est compris dans un intervalle de 3 à 8 %.

Le procédé selon l'invention peut être mis en oeuvre pour obtenir des films d'épaisseur variable par exemple comprise entre 5 et 100 µm. Il convient cependant tout particulièrement pour l'obtention de films minces d'épaisseur comprise entre 5 et 30 µm.

Outre leurs bonnes propriétés physico-mécaniques, les films obtenus par le procédé selon l'invention présentent une bonne résistance à l'abrasion qui s'explique par une excellente cohésion entre le polyester et les particules de charges qu'il contient. La cohésion charge/polymère est appréciée par mesure de l'aire moyenne de décohésion, c'est-à-dire l'aire du vide entourant l'espace particule/polymère, dans des conditions qui seront définies ci-après.

La mise en oeuvre, dans le procédé selon l'invention, d'un étirage longitudinal dans des conditions ne conduisant pas à l'orientation axiale des chaînes de polymère et à sa cristallisation, permet d'obtenir des films à F5 MD élevées car il autorise l'emploi de taux d'étirage longitudinal totaux plus élevés que ceux auxquels on peut faire appel dans un procédé en séquence inverse. De la même façon, l'utilisation de l'étape d'étirage mD contribue à l'obtention de hauts modules car elle permet d'atteindre des taux d'étirage longitudinal totaux ($\lambda$mD x $\lambda$MD) élevés sous une faible contrainte. Elle permet enfin de réaliser un bon compromis module longitudinal/retrait longitudinal dans l'intervalle 100-150°C et décohésion, tout en conservant des propriétés physico-mécaniques dans le sens travers acceptables par les utilisateurs. Enfin, la mise en oeuvre d'une telle étape permet de conférer aux films polyester obtenus une bonne aptitude à la découpe en bandes.

Bien que les films obtenus selon le procédé de la présente invention puissent trouver de nombreuses applications, ils conviennent tout particulièrement bien à l'obtention de bandes magnétiques par dépôt selon les techniques usuelles d'un revêtement magnétique de type connu. On peut par exemple procéder à l'enduction des films selon l'invention au moyen d'une composition constituée par un matériau magnétique en poudre dans un liant polymère ou par dépôt d'un métal tel que Fe, Co, Ni ou leurs alliages par évaporation sous vide.

Les exemples suivants illustrent l'invention et montrent comment elle peut être mise en pratique. Dans ces exemples EMD, ETD, F5 MD et F5 TD, les retraits dans les sens transversal et longitudinal, et la surface de vide ont été déterminés dans les conditions décrites ci-après :

1° EMD, ETD, F5 MD et TD, et la résistance à la rupture (Rr) ont été mesurés selon la norme ASTM D 882.
2° Des éprouvettes circulaires de diamètre 100 mm sont découpées dans un film polyester après repérage des sens de l'étirage transversal et de l'étirage longitudinal du film. Les éprouvettes sont ensuite portées à 105 ou à 150°C pendant 30 mm dans une étuve ventilée thermostatée. Après refroidissement, les diamètres des éprouvettes sont déterminées dans le sens transversal (DT) et dans le sens longitudinal (DL) au moyen d'un bloc de mesure constitué par une échelle de mesure graduée par 0,1 mm gravée sur une plaque de verre éclairée et par une lunette de visée. Le retrait est exprimé et calculé au moyen des formules :

- RT = 100 - DT

- RL = 100 - DL .

3° Taux moyen d'expansion de la surface de vide (TME)

Pour déterminer le TME, on procède de la manière suivante :

On prélève sur un film en PET un échantillon de film rectangulaire de 2,5 cm x 7 cm dont on repère les directions d'étirage et la face qui a été en contact avec le tambour de coulée. Cet échantillon est solidarisé au moyen de pinces à une lame de microscope en verre, puis l'ensemble est plongé pendant 35 minutes dans une solution aqueuse de soude à 0,45 N maintenue à 80°C. L'échantillon est ensuite rincé à l'eau déminéralisée (4 min) puis à l'éthanol (20 s). Un morceau de 1 cm$^2$ de cet échantillon est ensuite examiné au microscope électronique à balayage (en conservant le repèrage des directions d'étirage) et on détermine les dimensions de la décohésion autour d'une charge dans les directions d'étirage ($\phi$MD) et ($\phi$TD) qui correspondent aux dimensions maximale et minimale de la décohésion. Les valeurs moyennes de ces dimensions sont calculées sur 30 mesures pour une charge de diamètre médian en volume donné.

Pour une charge sensiblement sphérique le TME dans le plan du film est exprimé pour une charge de diamètre donné par l'expression :

$$TME = \frac{\varnothing MD \times \varnothing TD}{(\varnothing c)^2}$$

dans laquelle $\varnothing$MD, $\varnothing$TD et $\varnothing$c représentent respectivement la dimension de l'aire de décohésion dans le sens de l'étirage longitudinal, la dimension de l'aire de décohésion dans le sens transversal et le diamètre médian en volume de la charge.

Si le film contient des charges de diamètres médians en volume différents, le TME est mesuré pour chaque diamètre de charge.

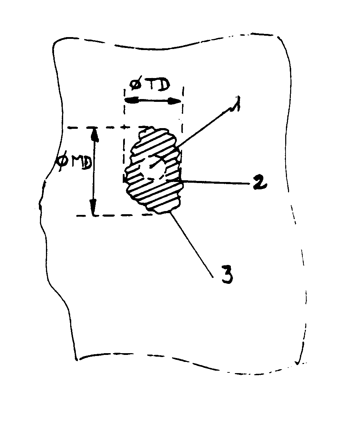

La figure jointe à titre illustratif représente une vue de dessus d'une coupe dans le plan du film d'une particule et du volume de décohésion qui l'entoure. Sur cette figure, (1) représente la section de la charge, (2) l'aire de décohésion et (3) le bord du polyester.

4° Biréfringence axiale et indice moyen de réfraction

Ils sont calculé à partir des valeurs des indices de réfraction nMD, nTD et nZ mesurés au moyen d'un réfractomère de ABBE par la méthode de R.J. SAMUELS J. Appl. Polymer Sci. 26 1383 - 1412 (1981).

5° Variation d'épaisseur ($\Delta$ep)

La variation d'épaisseur du film $\Delta$ep est mesurée au moyen d'un dispositif vendu sous la marque commerciale ANRITSU$^{®}$ par la Société ANRITSU, équipé d'un palpeur mécanique, d'un système de défilement et d'un système de calcul automatique. Les variations d'épaisseur sont mesurées sur une bande de 3 m et la mesure est répétée 3 fois pour chaque échantillon. Le système détermine l'écart minimal et maximal de hauteur et calcule $\Delta$ep au moyen de la formule :

$$\Delta ep = \left|\frac{eM - em}{emoy}\right| \times 100$$

dans laquelle :

- eM est la hauteur maximale
- em est la hauteur minimale
- emoy est l'épaisseur moyenne calculée sur le profil d'épaisseur enregistré.

Selon la valeur de $\Delta$ep les films sont classés en quatre catégories :

- A : $\Delta$ep de 0,3 à 0,5 %
- B : $\Delta$ep de > 0,4 à 0,6 %
- C : $\Delta$ep de 0,5 à 0,8 %
- D : $\Delta$ep > 0,8 %.

Dans les exemples suivants, on a fait appel à un polytéréphtalate d'éthylèneglycol (PET) ayant une viscosité intrinsèque de 0,75 dl/g mesurée à 25°C sur une solution dans l'orthochlorophénol, une température de transition vitreuse (Tg) de 80°C (mesurée à 20°C/min sur un appareil d'analyse thermique différentielle DU PONT 1090) et une température de cristallisation (Tc) de 170°C (mesurée dans les mêmes conditions que la Tg) et contenant :

    a) 0,15 % en poids d'une charge constituée par des particules de silice de diamètre médian en volume $\varnothing 1 = 0,535$ μm (vendue sous la référence commerciale KE-E 50 par la Société NIPPON SHOKUBAI),
    b) 0,03 % en poids de particules de silice de diamètre médian en volume $\varnothing 2$ 0,885 μm (vendue sous la référence commerciale KE-E 90 par la Société NIPPON SHOKUBAI).

EXEMPLES 1 à 7 ET ESSAIS COMPARATIFS A à G

Le PET décrit ci-dessus est extrudé à l'état fondu à travers une filière à fente sous forme d'un film épais que l'on refroidit à 30°C par placage électrostatique sur un tambour de refroidissement de façon à former un film amorphe (F). (F) est ensuite soumis à un étirage longitudinal mD, dans les conditions de température et de taux d'étirage figurant dans le tableau (1) ci-après, par passage successivement sur un rouleau lent, puis sur un rouleau rapide à 30°C. La biréfringence axiale et l'indice de réfraction moyen n du film monoétiré (F1) obtenu au cours de cette étape sont mesurés, puis (F1) est soumis successivement à un étirage transversal, puis à un second étirage longitudinal dans des conditions indiquées dans le tableau (1). Le film étiré est ensuite soumis à une thermofixation à une température maximale de 210°C avec une relaxation transversale de 2 %.

Le film ainsi obtenu, désigné ci-après (F2) est ensuite soumis à la mesure de ses propriétés mécaniques. les résultats obtenus sont consignés dans le tableau (2).

TABLEAU 1

| EX. | Etirage mD | | Etirage TD | | Etirage MD | | λmD x λMD | λTD x λMD | λmD x λTD x λMD | $\frac{\lambda mD \times \lambda MD}{\lambda TD}$ |
|---|---|---|---|---|---|---|---|---|---|---|
| | λmD | T°C | λTD | T°C | λMD | T°C | | | | |
| 1 | 1,9 | 125 | 3,2 | 100 | 3,2 | 110 | 6,08 | 10,24 | 19,46 | 1,90 |
| 2 | 1,9 | 125 | 3,8 | 100 | 3,2 | 110 | 6,08 | 12,16 | 23,10 | 1,60 |
| 3 | 2,4 | 125 | 3,4 | 100 | 2,5 | 110 | 6,00 | 8,50 | 20,40 | 1,76 |
| 4 | 2,4 | 125 | 4,0 | 100 | 2,5 | 110 | 6,00 | 10,00 | 24,00 | 1,50 |
| 5 | 2,4 | 125 | 4,0 | 100 | 2,7 | 110 | 6,48 | 10,80 | 25,90 | 1,62 |
| 6 | 1,9 | 125 | 3,8 | 100 | 2,8 | 110 | 5,32 | 10,64 | 20,20 | 1,40 |
| 7 | 1,9 | 125 | 3,8 | 100 | 2,8 | 110 | 5,32 | 10,64 | 20,21 | 1,40 |
| ES.COMP. | | | | | | | | | | |
| A | 1,9 | 125 | 3,8 | 100 | 2,0 | 110 | 3,80 | 7,60 | 14,44 | 1,00 |
| B | 1,9 | 125 | 4,4 | 100 | 2,4 | 110 | 4,56 | 10,50 | 20,06 | 1,04 |
| C | 1,4 | 125 | 3,6 | 100 | 2,4 | 110 | 3,36 | 8,64 | 12,09 | 0,93 |
| D | 1,4 | 125 | 3,6 | 100 | 3,2 | 110 | 4,48 | 11,52 | 16,13 | 1,24 |
| E | 1,4 | 125 | 4,2 | 100 | 2,8 | 110 | 3,92 | 11,76 | 16,46 | 0,93 |
| F | 1,9 | 125 | 4,4 | 100 | 3,1 | 110 | 5,89 | 13,64 | 25,91 | 1,34 |
| G | 1,9 | 125 | 3,2 | 100 | 2,4 | 110 | 4,56 | 7,68 | 14,60 | 1,43 |

EP 0 539 302 B2

TABLEAU 2

| EXEMPLES | FILM F1 | | PROPRIETES PHYSIQUES ET MECANIQUES | | | | | | | | | |
| | | | FILM F2 | | | | | | | | | |
| | n moyen | Δn ax | EMD daN/mm² | ETD daN/mm² | EMD + ETD daN/mm² | F5 MD daN/mm² | Rr TD daN/mm² | F5 TD daN/mm² | RMD 105 % | RMD 150 % | RTD 105 % | Rr TD/ F5 TD |
| 1 | 1,5760 | 0,00875 | 878 | 402 | 1280 | 21,4 | 17,2 | 10,0 | 1,5 | 5,2 | 0,4 | 1,7 |
| 2 | 1,5760 | 0,00875 | 841 | 434 | 1275 | 20,7 | 19,5 | 10,1 | 1,5 | 5,2 | 0,5 | 1,9 |
| 3 | 1,5767 | 0,00110 | 832 | 425 | 1257 | 19,6 | 19,2 | 10,0 | 1,2 | 4,6 | 0,4 | 1,9 |
| 4 | 1,5767 | 0,00110 | 816 | 407 | 1223 | 18,4 | 19,4 | 10,0 | 1,1 | 3,6 | 0,4 | 1,9 |
| 5 | 1,5767 | 0,00110 | 878 | 416 | 1294 | 21,7 | 20,2 | 10,1 | 1,4 | 4,9 | 0,4 | 2,0 |
| 6 | 1,5760 | 0,00875 | 742 | 447 | 1189 | 16,2 | 19,5 | 10,2 | 1,3 | 3,7 | 0,3 | 1,9 |
| 7 | 1,5760 | 0,00875 | 730 | 436 | 1166 | 16 | 17,5 | 9,7 | 1,2 | 4,5 | 0,4 | 1,8 |
| ESSAIS COMPARAT. | | | | | | | | | | | | |
| A | 1,5760 | 0,00875 | 530 | 485 | 1015 | 11,0 | 20,0 | 9,7 | 1,0 | 2,6 | 0,3 | 2,1 |
| B | 1,5760 | 0,00875 | 571 | 480 | 1051 | 11,8 | 22,0 | 10,2 | 1,0 | 3,1 | 0,5 | 2,2 |
| C | 1,5763 | 0,00550 | 523 | 452 | 975 | 10,7 | 21,3 | 9,9 | 0,8 | 2,5 | 0,4 | 2,2 |
| D | 1,5763 | 0,00550 | 665 | 437 | 1102 | 13,9 | 21,0 | 9,7 | 1,4 | 3,6 | 0,4 | 2,2 |
| E | 1,5763 | 0,00550 | 577 | 457 | 1034 | 12,0 | 21,0 | 9,5 | 0,9 | 2,7 | 0,4 | 2,2 |
| F | 1,5760 | 0,00875 | 737 | 478 | 1215 | 17,1 | 24,0 | 10,6 | 1,4 | 4,4 | 0,3 | 2,3 |
| G | 1,5760 | 0,00875 | 666 | 431 | 1097 | 13,4 | 19,0 | 9,7 | 1,0 | 2,6 | 0,4 | 2,0 |

TABLEAU 2 (suite)

| EXEMPLES | FILM F2 | | |
|---|---|---|---|
| | TME φ1 | TME φ2 | Δep |
| 1 | 5,9 | 6,4 | A |
| 2 | 6,7 | 8,7 | A |
| 3 | 5,6 | 5,4 | A |
| 4 | 4,2 | 5,2 | A |
| 5 | 7,8 | 9,0 | A |
| 6 | 4,7 | 6,0 | B |
| 7 | 4,2 | 4,7 | B |
| ESSAIS COMPARAT. A | 2,3 | 3,5 | D |
| B | 3,8 | 5,4 | C |
| C | 2,2 | 2,5 | D |
| D | 3,8 | 4,6 | C |
| E | 3,75 | 5,2 | D |
| F | 8,6 | 11,6 | B |
| G | 2,4 | 3,1 | C |

ESSAI COMPARATIF H

On a tenté de préparer un film biétiré en opérant selon le procédé de l'exemple 1, mais après avoir supprimé l'étirage mD et avoir appliqué à l'étirage MD un taux $\lambda$MD de 6,08 équivalent au taux total d'étirage longitudinal $\lambda$mD x $\lambda$MD de l'exemple 1, toutes autres choses étant par ailleurs égales. Dans ces conditions, il n'a pas été possible d'obtenir un film continu en raison des casses au cours de l'étirage longitudinal.

ESSAI COMPARATIF I

On répète les essais 1 à 7 en ne réalisant pas de premier étirage longitudinal ($\lambda$mD = 1,0).
Les valeurs des différents paramètres ainsi que les résultats obtenus sont indiqués ci-après.

1) Paramètres d'étirage :

- $\lambda$mD = 1,0
- $\lambda$TD = 3,7 à 100°C
- $\lambda$MD = 4,75 à 110°C
- $\lambda$TD x $\lambda$MD = 17,58
- $\lambda$mD x $\lambda$TD x $\lambda$MD = 17,58
-

$$\frac{\lambda mD \ x \ \lambda MD}{\lambda TD} = 1,28$$

2) Propriétés du film :
    Pas de film F1.

Film F2 :

- EMD = 820 daN/mm$^2$
- ETD = 450 daN/mm$^2$
- EMD + ETD = 1270 daN/mm$^2$
- F5 MD = 20,2 daN/mm$^2$
- Rr TD = 28,5 daN/mm$^2$
- F5 TD = 11,5 daN/mm$^2$
- RMD 105 = 2,4 %
- RMD 150 = 8,4 %
- RTD 105 = 1,5 %
- Rr TD/F5 TD = 2,5

ESSAI COMPARATIF J

On répète les essais 1 à 7 en réalisant le premier étirage longitudinal λmD en 2 étapes successives et sans refroidir le film avant l'étirage transversal (selon DE-A-3 621 205).

Les valeurs des différents paramètres ainsi que les résultats obtenus sont indiqués ci-après.

1) Paramètres d'étirage :

- λmD = 3,0 au total : 1ère étape : taux d'étirage 1,4 à 115°C
                        2ème étape : taux d'étirage 2,14 à 95°C
- λTD = 3,7 à 100°C
- λMD = 1,6 à 120°C
- λTD x λMD = 5,92
- λmD x λTD x λMD = 17,8
- λmD x λMD = 4,8
-

$$\frac{\lambda mD \text{ x } \lambda MD}{\lambda TD} = 1,30$$

2) Propriétés des films :

Film F1

- n moyen = 1,5840
- Δn ax = 0,0400

Film F2 :

- EMD = 680 daN/mm$^2$
- ETD = 430 daN/mm$^2$
- EMD + ETD = 1110 daN/mm$^2$
- F5 MD = 16,0 daN/mm$^2$
- Rr TD = 22,8 daN/mm$^2$
- F5 TD = 10,7 daN/mm$^2$
- RMD 105 = 1,7 %
- RMD 150 = 5,0 %
- RTD 105 = 0,6 %
- Rr TD/F5 TD = 2,1

**Revendications**

1. Procédé d'obtention de films orientés en polyesters semi-cristallins présentant les propriétés suivantes :

- F5 MD $\geq$ 18 daN/mm$^2$
- F5 TD $\geq$ 10 daN/mm$^2$
- EMD $\geq$ 800 daN/mm$^2$
- ETD $\geq$ 400 daN/mm$^2$
- EMD + ETD $\geq$ 1200 daN/mm$^2$
- RMD 105 $\leq$ 1,5%
- RMD 150 $\leq$ 5,2 %
- Rr TD/F5 TD $\leq$ 2,2 ,

consistant à soumettre un film en polyester amorphe à une séquence d'étirages comprenant successivement un étirage longitudinal en une seule étape, un étirage transversal et un étirage longitudinal, caractérisé an ce que le film étiré qui résulte du premier étirage longitudinal mD présente :

i) une biréfringence axiale ($\Delta$n ax) inférieure ou égale à 0,015 ;
ii) un indice de réfraction moyen $\leq$ 1,5775 ;
en ce que le premier étirage mD est conduit à une température comprise entre Tg + 40°C et Tc - 20°C et avec un taux d'étirage $\lambda$mD compris entre 1,2 et 3, en ce que l'étirage transversal TD est conduit avec un taux d'étirage $\lambda$TD compris entre 3 et 5 et à une température comprise entre Tg + 10°C et Tg + 40°C, en ce que le second étirage MD est réalisé avec un taux d'étirage $\lambda$MD compris entre 2,3 et 5 et à une température de Tg + 15°C à Tg + 50°C, en ce que le taux total d'étirage longitudinal $\lambda$mD $\times$ $\lambda$MD est compris entre 5,5 et 7 et en ce que le taux d'étirage planaire $\lambda$TD $\times$ $\lambda$MD est inférieur ou égal à 12,5.

2. Procédé selon la revendication 1, caractérisé en ce qu'à la fin de l'étirage longitudinal mD, on procède à un refroidissement du film à une température allant de Tg - 60°C à Tg - 20°C et de préférence de Tg - 50°C à Tg - 30°C, par passage sur un ou plusieurs rouleaux rapides dont la température se situe dans l'une des zones indiquées précédemment.

3. Procédé selon l'une quelconque des revendications 1 ou 2, caractérisé an ce que le taux d'étirage planaire total $\lambda$mD $\times$ $\lambda$TD $\times$ $\lambda$MD est compris entre 19 et 26.

4. Procédé selon l'une quelconque des revendications 1 à 3, caractérisé en ce que le rapport ($\lambda$mD $\times$ $\lambda$MD)/$\lambda$TD est supérieur ou égal à 1,35.

5. Procédé selon la revendication 1, consistant à soumettre un film amorphe à une séquence d'étirages comprenant successivement un étirage longitudinal, un étirage transversal et un étirage longitudinal, puis à une thermofixation, caractérisé en ce que :

a) le premier étirage longitudinal est réalisé à une température de Tg + 40°C à Tc - 20°C et avec un taux d'étirage $\lambda$mD pris dans l'intervalle de 1,2 à 3 ;
b) l'étirage transversal est réalisé avec un taux d'étirage $\lambda$TD pris dans l'intervalle de 3 à 5 ;
c) le deuxième étirage longitudinal est réalisé avec un taux d'étirage $\lambda$MD pris dans l'intervalle de 2,3 à 5 ;
d) le taux d'étirage longitudinal total $\lambda$mD $\times$ $\lambda$MD est compris entre 5,5 et 6,5 ;
e) le taux d'étirage total $\lambda$TD $\times$ $\lambda$MD est inférieur ou égal à 12,5 ;
f) le taux d'étirage planaire total $\lambda$mD $\times$ $\lambda$TD $\times$ $\lambda$MD est compris entre 19 et 26 ;
g) le rapport ($\lambda$mD $\times$ $\lambda$MD)/$\lambda$TD est supérieur ou égal à 1,45.

**Claims**

1. Process for obtaining oriented films made of semicrystalline polyesters exhibiting the following properties:

- MD F5 $\geq$ 18 daN/mm$^2$
- TD F5 $\geq$ 10 daN/mm$^2$
- MDE $\geq$ 800 daN/mm$^2$
- TDE $\geq$ 400 daN/mm$^2$

- MDE +TDE $\geq$ 1200 daN/mm$^2$
- MDS 105 $\leq$ 1,5 %
- MDS 150 $\leq$ 5.2%
- TD St/TD F5 $\leq$ 2.2 ,

consisting in subjecting an amorphous polyester film to a sequence of drawings comprising successively a lengthwise drawing in a single stage, a transverse drawing and a lengthwise drawing, characterized in that the drawn film resulting from the first lengthwise drawing mD exhibits:

i) an axial birefringence (ax $\Delta$n) lower than or equal to 0.015;
ii) a mean refractive index $\leq$ 1.5775;

in that the first drawing mD is conducted at a temperature of between Tg + 40°C and Tc - 20°C and with a draw ratio $\lambda$mD of between 1.2 and 3;
in that the TD transverse drawing is conducted with a draw ratio $\lambda$TD of between 3 and 5 and at a temperature of between Tg + 10°C and Tg + 40°C;
in that the second MD drawing is carried out with a draw ratio $\lambda$mD of between 2.3 and 5 and at a temperature of Tg + 15°C to Tg + 50°C;
in that the total lengthwise draw ratio $\lambda$mD x $\lambda$MD is between 5.5 and 7; and
in that the planar draw ratio $\lambda$TD x $\lambda$MD is lower than or equal to 12.5.

2. Process according to Claim 1, characterized in that at the end of the lengthwise drawing mD the film is cooled to a temperature ranging from Tg - 60°C to Tg - 20°C and preferably from Tg - 50°C to Tg - 30°C, by passing over one or a number of fast rolls whose temperatures lie in one of the zones indicated above.

3. Process according to any one of Claims 1 or 2, characterized in that the total planar draw ratio $\lambda$mD x $\lambda$TD x $\lambda$MD is between 19 and 26.

4. Process according to any one of Claims 1 to 3, characterized in that the ratio ($\lambda$mD x $\lambda$MD)/$\lambda$TD is higher than or equal to 1.35.

5. Process according to Claim 1, consisting in subjecting an amorphous film to a sequence of drawings comprising successively a lengthwise drawing, a transverse drawing and a lengthwise drawing, then to a heat-setting, characterized in that:

a) the first lengthwise drawing is carried out at a temperature of Tg + 40°C to Tc - 20°C and with a draw ratio $\lambda$mD taken in the range from 1.2 to 3;
b) the transverse drawing is carried out with a draw ratio $\lambda$TD taken in the range from 3 to 5;
c) the second lengthwise drawing is carried out with a draw ratio $\lambda$MD taken in the range from 2.3 to 5;
d) the total lengthwise ratio $\lambda$mD x $\lambda$MD is between 5.5 and 6.5;
e) the total draw ratio $\lambda$TD x $\lambda$MD is lower than or equal to 12.5;
f) the total planar draw ratio $\lambda$mD x $\lambda$TD x $\lambda$MD is between 19 and 26;
g) the ratio ($\lambda$mD x $\lambda$MD)/$\lambda$TD is higher than or equal to 1.45.

**Patentansprüche**

1. Verfahren zur Herstellung von orientierten Filmen aus semikristallinen Polyestern, die folgenden Eigenschaften aufweisen:

- F5 MD $\geq$ 18 daN/mm$^2$
- F5 TD $\geq$ 10 daN/mm$^2$
- EMD $\geq$ 800 daN/mm$^2$
- ETD $\geq$ 400 daN/mm$^2$
- EMD +ETD $\geq$ 1200 daN/mm$^2$
- RMD 105 $\leq$ 1,5 %
- RMD 150 $\leq$ 5.2 %
- Rr TD/F5 TD $\leq$ 2.2 ,

darin bestehend, dass ein Film aus amorphem Polyester mit einer Verstreckungsfolge umfassend nacheinander eine Längsverstreckung in einer einzigen Stufe, eine Querverstreckung und eine Längsverstreckung, dadurch gekennzeichnet, dass der versteckte Film, der sich aus der ersten Längsverstreckung mD ergibt, aufweist:

 i) eine axiale Doppelbrechung ($\Delta$n ax) unterhalb oder gleich 0,015;
 ii) einen mittleren Brechungsindex $\leq$ 1,5775;

  dass die erste Verstreckung mD bei einer Temperatur zwischen Tg + 40°C und Tc - 20°C und mit einem Verstreckungsgrad $\lambda$mD zwischen 1,2 und 3 durchgeführt wird;
  dass das Querverstrecken TD mit einem Verstreckungsgrad $\lambda$TD zwischen 3 und 5 und bei einer Temperatur zwischen Tg + 10°C und Tg + 40°C durchgeführt wird;
  dass das zweite Verstrecken MD mit einem Verstreckungsgrad $\lambda$MD zwischen 2,3 und 5 und bei einer Temperatur zwischen Tg + 15°C bis Tg + 50°C durchgeführt wird;
  dass der Gesamtlängsverstreckungsgrad $\lambda$mD x $\lambda$MD zwischen 5,5 und 7 beträgt; und
  dass der ebene Verstreckungsgrad $\lambda$TD x $\lambda$MD unterhalb oder gleich 12,5 ist.

**2.** Verfahren gemäss Anspruch 1, dadurch gekennzeichnet, dass man zum Ende der Längsverstreckung mD eine Abkühlung des Films auf eine Temperatur von Tg - 60°C bis Tg - 20°C und vorzugsweise von Tg - 50°C bis Tg - 30°C durchführt, durch Leiten über eine oder mehrere schnell laufende Walzen, deren Temperatur sich in einer der vorstehend angegebenen Zonen befindet.

**3.** Verfahren gemäss einem der Ansprüche 1 oder 2, dadurch gekennzeichnet, dass der ebene Gesamtverstreckungsgrad $\lambda$mD x $\lambda$TD x $\lambda$MD zwischen 19 und 26 beträgt.

**4.** Verfahren gemäss einem der Ansprüche 1 bis 3, dadurch gekennzeichnet, dass das Verhältnis ($\lambda$mD x $\lambda$MD)/$\lambda$TD über oder gleich 1,35 ist.

**5.** Verfahren gemäss Anspruch 1, darin bestehend, dass ein amorpher Film einer Reihe von Verstreckungen unterworfen wird, die nacheinander eine Längsverstreckung, eine Querverstreckung und eine Längsverstreckung umfasst, dann einer Thermofixierung, dadurch gekennzeichnet, dass:

 a) die erste Längsverstreckung bei einer Temperatur von Tg + 40°C bis Tc - 20°C und mit einem Verstreckungsgrad $\lambda$mD in dem Bereich von 1,2 bis 3 durchgeführt wird;
 b) die Querverstreckung mit einem Verstreckungsgrad $\lambda$TD in dem Bereich von 3 bis 5 durchgeführt wird;
 c) die zweite Längsverstreckung mit einem Verstreckungsgrad $\lambda$MD in dem Bereich von 2,3 bis 5 durchgeführt wird;
 d) der Gesamtlängsverstreckungsgrad $\lambda$mD x $\lambda$MD zwischen 5,5 und 6,5 beträgt;
 e) der Gesamtverstreckungsgrad $\lambda$TD x $\lambda$MD unterhalb oder gleich 12,5 ist;
 f) der ebene Gesamtverstreckungsgrad $\lambda$mD x $\lambda$TD x $\lambda$MD in dem Bereich von 19 und 26 ist;
 g) das Verhältnis ($\lambda$mD x $\lambda$MD)/$\lambda$TD oberhalb oder gleich 1,45 ist.